# EUROPÄISCHE PATENTSCHRIFT

(11) **EP 2 772 572 B1**
(45) Veröffentlichungstag und Bekanntmachung des Hinweises auf die Patenterteilung: **30.10.2019**
(21) Anmeldenummer: 14155400.6
(22) Anmeldetag: 17.02.2014
(51) Int. Cl.: D01H 1/115

(54) **Spinnstelle zur Herstellung eines Garns**
Spinning station for producing a yarn
Poste de filage pour la fabrication d'un fil

(30) Priorität: 28.02.2013 DE 102013101988
(43) Veröffentlichungstag der Anmeldung: 03.09.2014
(73) Patentinhaber: Maschinenfabrik Rieter AG, 8406 Winterthur (CH)
(72) Erfinder: Schäffler Gernot, 73116 Wäschenbeuren (DE)
(74) Vertreter: Baudler, Ron

(56) Entgegenhaltungen:
- DE-A1-102004 053 505
- DE-A1-102007 006 674
- JP-A- H07 118 967

## Beschreibung

Die vorliegende Erfindung betrifft eine Spinnstelle einer Luftspinnmaschine, die der Herstellung eines Garns aus einem Faserverband dient, wobei die Spinnstelle eine Spinndüse mit einer eine Einlauföffnung für den Faserverband aufweisenden Wirbelkammer besitzt, wobei die Spinnstelle in die Wirbelkammer gerichtete Luftdüsen aufweist, die im Bereich einer die Wirbelkammer umgebenden Wandung in die Wirbelkammer münden und über die Druckluft in einer vorgegebenen Drehrichtung in die Wirbelkammer einbringbar ist, um dem Faserverband eine Drehung in der genannten Drehrichtung zu erteilen, und wobei die Luftdüsen mit Hilfe wenigstens einer Fluidverbindung mit einer Druckluftquelle in Verbindung stehen.

Gattungsgemäße Spinnstellen sind im Stand der Technik bekannt, wobei im Sinne der Erfindung unter dem Begriff Garn generell ein Faserverband zu verstehen ist, bei dem zumindest ein Teil der Fasern um einen innenliegenden Kern gewunden sind. Umfasst ist somit z. B. ein Garn im herkömmlichen Sinne, das beispielsweise mit Hilfe einer Webmaschine zu einem Stoff verarbeitet werden kann. Ebenso betrifft die Erfindung Luftspinnmaschinen, mit deren Hilfe sogenanntes Vorgarn (andere Bezeichnung: Lunte) hergestellt werden kann. Diese Art Garn zeichnet sich dadurch aus, dass es trotz einer gewissen Festigkeit, die ausreicht, um das Garn zu einer nachfolgenden Textilmaschine zu transportieren, noch immer verzugsfähig ist. Das Vorgarn kann also mit Hilfe einer Verzugseinrichtung, z. B. dem Streckwerk, einer das Vorgarn verarbeitenden Textilmaschine, beispielsweise einer Ringspinnmaschine, verzogen werden, bevor es endgültig versponnen wird.

Unabhängig von der Festigkeit des Garns ist es jedoch stets wünschenswert, dass die in die Wirbelkammer mündenden Luftdüsen mit einem definierten Luftdruck beaufschlagt werden, da sich dieser direkt auf die Luftströmung innerhalb der Wirbelkammer und somit auf die einzelnen Garnparameter (Festigkeit, Griffigkeit, etc.) bzw. die Garnqualität auswirkt.

Soll der Spinndruck (= Luftdruck im Bereich der Luftdüsen) für die Produktion einer neuen Garnsorte geändert werden, so ist es im Stand der Technik bekannt, den Luftdruck der die Spinnstelle(n) mit Druckluft versorgenden Druckluftquelle zu verändern. Rein vorsorglich sei an dieser Stelle darauf hingewiesen, dass im Rahmen der Erfindung unter dem Begriff "Druckluftquelle" derjenige Abschnitt der Luftspinnmaschine zu verstehen ist, über den die einzelnen druckluftbenötigenden Bauteile/Elemente der Luftspinnmaschine (z. B. Ventile, Druckluftzylinder, Luftdüsen der Spinnstelle(n)) mit Druckluft versorgt werden. Es kann sich hierbei beispielsweise um eine Rohranordnung handeln, die mit den jeweiligen Bauteilen/Elementen einerseits und mit einem Druckluftgenerator bzw. dem Druckluftsystem einer Spinnerei in Verbindung steht.

Nachteilig bei einem derartigen Vorgehen ist jedoch die Tatsache, dass sich eine entsprechende Druckreduzierung im Bereich der Druckluftquelle nicht nur auf den Spinndruck, sondern auch auf die sonstigen druckluftbenötigten Bauteile der Luftspinnmaschine auswirkt. Da diese Bauteile jedoch in der Regel auf einen definierten Solldruck ausgelegt sind, sind Fehlfunktionen in diesen Fällen nicht ausgeschlossen.

In diesem Zusammenhang beschreibt die DE 10 2004 053 505 A1 eine Luftspinnmaschine, bei der die einzelnen von der Hauptdruckluftleitung abzweigenden Druckluftleitungen regelbare Ventile aufweisen. Hierdurch ist es möglich, den Spinndruck an den einzelnen Spinnstellen individuell auf einen gewünschten Wert einzuregeln.

Aufgabe der vorliegenden Erfindung ist es, diesem Nachteil zu begegnen und eine Spinnmaschine vorzuschlagen, bei der der Spinndruck bei Bedarf möglichst ohne negative Auswirkungen auf außerhalb der Spinndüse liegende Bauteile und hierbei schnell und kostengünstig verringert werden kann. Die Aufgabe wird gelöst durch eine Spinnstelle mit den Merkmalen des Patentanspruchs 1.

Erfindungsgemäß zeichnet sich die Spinnstelle nun dadurch aus, dass sie zumindest zwei austauschbare Drosselelemente umfasst. Unter dem Begriff Drosselelement ist ein Bauteil der Spinnstelle zu verstehen, das in den Strömungsweg der Druckluft zwischen der Druckluftquelle (z. B. in Form eines Druckluftrohrs) und den oben genannten Luftdüsen platziert wird. Hierbei dient das Drosselelement der Begrenzung des Volumenstroms der Druckluft, die von der Druckluftquelle während des Betriebs der Spinnstelle entlang ihres Strömungswegs in die Wirbelkammer strömt. Mit anderen Worten kann nun wahlweise ein Drosselelement zum Einsatz kommen, das bei einem definierten Luftdruck der Druckluftquelle einen bestimmten Luftvolumenstrom im Bereich der Luftdüsen ermöglicht. Dieser konkrete Luftvolumenstrom resultiert wiederum in einem bestimmten Luftdruck im Bereich nach dem Drosselelement (in Strömungsrichtung der Druckluft gesehen), so dass der Spinndruck bei vorgegebenem Druckluftquellenluftdruck je nach Wahl des entsprechenden Drosselelements auf einen definierten Betrag eingestellt werden kann, der wiederum geringer als (oder maximal gleich dem) Druckluftquellenluftdruck ist.

Während also der Luftdruck innerhalb der Druckluftquelle stets konstant bleiben kann (dies wirkt sich positiv auf die Betriebsweise der luftdruckbenötigenden Bauteile aus, die außerhalb der Spinndüse platziert sind), ist der Spinndruck je nach Wahl des Drosselelements auf einen gewünschten Wert (vorzugsweise auf einen Wert zwischen 3 und 6 bar) einstellbar.

Insbesondere ist es vorteilhaft, wenn das zum Einsatz kommende Drosselelement Teil der Fluidverbindung ist. Erfindungsgemäß ist das Drosselelement direkt in die Fluidverbindung zu integrieren, die zwischen der Spinndüse und der Druckluftquelle bzw. einem entsprechenden Anschlussbereich derselben verläuft. Hierbei ist das zum Einsatz kommende Drosselelement wiederum als lösbar mit der Fluidverbindung verbundenes Bauteil ausgebildet, das sich im durch die Fluidverbindung vorgegebenen Strömungsweg befindet oder diesen gemeinsam mit der Fluidverbindung bildet. Während also das zum Einsatz kommende Drosselelement als separates Bauteil zwischen zwei Fluidverbindungen platziert und entsprechend ausgetauscht werden kann, ist es ebenso denkbar, dass die Drosselelemente selbst eine oder mehrere Fluidverbindungen umfassen. Die Drosselelemente könnten beispielsweise zwei Druckluftschläuche und einen die beiden Druckluftschläuche verbindenden Drosselabschnitt umfassen, wobei der Drosselabschnitt des zum Einsatz kommenden Drosselelements wiederum fest oder lösbar mit den Druckluftschläuchen verbunden sein könnte. In diesem Fall wäre es schließlich möglich, nicht nur den Drosselabschnitt, sondern das gesamte Drosselelement, das in diesem Fall den Drosselabschnitt und einen oder mehr Fluidverbindungen umfassen würde, auszutauschen, um den Volumenstrom der Druckluft an der entsprechenden Spinnstelle auf einen vorgegebenen Wert zu begrenzen.

Vorteilhaft ist es, wenn die Drosselelemente eine minimale innere Querschnittsfläche keine als die minimale innere Querschnittsfläche der Fluidverbindung. Dies bewirkt schließlich, dass der Druckluftvolumenstrom gegenüber einer Ausführung gedrosselt wird, bei dem kein Drosselelement vorhanden wäre. Folglich lässt sich auch der Spinndruck durch die Wahl der minimalen inneren Querschnittsfläche bzw. des entsprechenden Drosselelements festlegen.

Vorteilhaft ist es zudem, wenn die Fluidverbindung schlauchförmig ausgebildet ist. Der Schlauch verläuft vorzugsweise von einem Anschlussabschnitt der Spinndüse zu einem davon beabstandeten Anschlussabschnitt der Druckluftquelle, wobei zwischen dem zuletzt genannten Anschlussabschnitt und der Druckluftquelle selbstverständlich weitere Bauteile, z. B. in Form von Ventilen, vorhanden sein können, mit denen die jeweiligen Spinnstellen von einem Ruhemodus (in dem keine Druckluft durch die Luftdüsen strömt) in einen Betriebszustand versetzt werden können (in dem die Produktion des Garns erfolgt).

Auch ist es von Vorteil, wenn die Fluidverbindung wenigstens zwei separate Schlauchabschnitte aufweist und das zum Einsatz kommende Drosselelement zwischen den jeweiligen Schlauchabschnitten platziert ist. Es kann also vorteilhaft sein, wenn die Fluidverbindung einen ersten Schlauchabschnitt, der die Spinndüse mit dem zum Einsatz kommenden Drosselelement verbindet, und einen zweiten Schlauchabschnitt, der das entsprechende Drosselelement mit der Druckluftquelle verbindet, aufweist. Das zum Einsatz kommende Drosselelement ist vorzugsweise lösbar mit den beiden Schlauchabschnitten verbunden und kann je nach herzustellendem Garn schnell und vorzugsweise werkzeuglos ausgetauscht werden.

Ebenso bringt es Vorteile mit sich, wenn die Drosselelemente einteilig ausgebildet sind. Denkbar ist beispielsweise die Verwendung eines entsprechenden Spritzgussteils, welches lediglich zwischen entsprechende Anschlussabschnitte der Fluidverbindung gesteckt oder auf andere Weise entsprechend platziert werden muss.

Auch ist es äußert vorteilhaft, wenn die Drosselelemente aus Kunststoff gefertigt sind. Insbesondere, da pro Spinnstelle eine Mehrzahl von Drosselelementen mit unterschiedlichen Drosseleigenschaften deponiert werden müssten, um alle Spinnstellen gemeinsam auf eine neue Garnart einstellen zu können, ist es von Vorteil, wenn sich die Kosten der eingesetzten Drosselelemente in gewissen Grenzen halten.

Ebenso ist es vorteilhaft, wenn das zum Einsatz kommende Drosselelement mit der Fluidverbindung, der Spinnstelle und/oder der Druckluftquelle mit Hilfe einer oder mehrerer Steckverbindung(en) und/oder Schraubverbindung(en) verbunden ist. Derartige Verbindungen sind schnell und in der Regel werkzeuglos lösbar bzw. herstellbar, so dass bei Bedarf ein rascher Austausch der jeweiligen Drosselelemente erfolgen kann.

Vorteile bringt es zudem mit sich, wenn die Drosselelemente wenigstens einen Anschlussabschnitt aufweisen, mit dem sie jeweils mit der Fluidverbindung, der Spinnstelle und/oder der Druckluftquelle form- und/oder reibschlüssig verbunden sind. Im Idealfall erfolgt die Verbindung ohne zusätzliche Befestigungselemente, so dass die Einbindung der Drosselelemente bzw. deren Anschlussabschnitte einfach und kostengünstig realisierbar sind. Die jeweilige Verbindung kann beispielsweise mit Hilfe entsprechender Verrastungen oder Klipsverbindungen erfolgen.

Vorteilhaft ist es, wenn der Anschlussabschnitt eine unebene Außenkontur aufweist, über die es mit der Fluidverbindung, der Spinnstelle und/oder der Druckluftquelle in Verbindung steht. Beispielsweise könnte der oder die Anschlussabschnitt(e) ringförmige Erhebungen und Einschnürungen aufweisen, so dass ein auf den jeweiligen Anschlussabschnitt aufgeschobener Schlauchabschnitt der Fluidverbindung sicher mit dem zum Einsatz kommenden Drosselelement verbindbar ist.

Vorteile bringt es zudem mit sich, wenn das zum Einsatz kommende Drosselelement mit der Fluidverbindung, der Spinnstelle und/oder der Druckluftquelle über eine oder mehrere Schnellkupplung(en) verbunden ist. Entsprechende Verbindungselemente sind im Stand der Technik grundsätzlich bekannt und ermöglichen ein schnelles werkzeugloses Herstellen bzw. Lösen der Verbindung der genannten Bauteile. Hierbei ist ein Feder- bzw. Einrastmechanismus vorgesehen, der nach der Verbindung der Einzelbestandteile der Schnellkupplung verhindert, dass die jeweiligen Bestandteile ungewollt wieder getrennt werden. Soll eine bewusste Trennung erfolgen, beispielsweise, weil das betreffende Drosselelement gegen ein Drosselelement mit anderem minimalem inneren Querschnitt ausgetauscht werden soll, so muss lediglich der genannte Feder- oder Einrastmechanismus betätigt werden, um ein Lösen der entsprechenden Verrastung/Fixierung zu bewirken.

Vorteilhaft ist es zudem, wenn die Spinnstelle mehrere in Reihe oder parallel geschaltete Drosselelemente besitzt, die im Strömungsweg der Druckluft zwischen der Druckluftquelle und den Luftdüsen platziert sind. Auf diese Weise ist es möglich, mit einer geringen Anzahl von Grunddrosselelementen eine Vielzahl von Spinndrücken zu realisieren. Beispielsweise könnte eine Drossel, die bei einem Druckluftquellenluftdruck von 6 bar einen Spinndruck von 3 bar bewirken würde, mit einer Drossel parallel geschaltet werden, die bei gleichem Druckluftquellenluftdruck einen Spinndruck von 5 bar bewirken würde. In diesem Fall würde man schließlich einen Spinndruck von ungefähr 4 bar erhalten.

Schließlich kann es von Vorteil sein, die Drosselelemente farbig oder durch entsprechende Formgebung zu kennzeichnen. Die Kennzeichnung könnte beispielsweise mit dem Volumenstrom der Druckluft korrespondieren, die das Drosselelement bei einem bestimmten an das jeweilige Drosselelement angelegten Luftdruck passiert. Neben der Kennzeichnung der Drosselelemente könnte es ebenso vorteilhaft sein, auch die mit dem Drosselelement in Verbindung stehenden Schlauchabschnitte (farblich) zu kennzeichnen.

Weitere Vorteile der Erfindung sind in den nachfolgenden Ausführungsbeispielen beschrieben. Es zeigen:
- **Figur 1**: eine teilweise geschnittene Seitenansicht einer erfindungsgemäßen Spinnstelle,
- **Figur 2**: einen Ausschnitt des erfindungswesentlichen Abschnitts einer erfindungsgemäßen Spinnstelle,
- **Figur 3**: eine alternative Ausführung des in Figur 2 gezeigten Abschnitts, und
- **Figur 4**: ein erfindungsgemäßes Drosselelement.

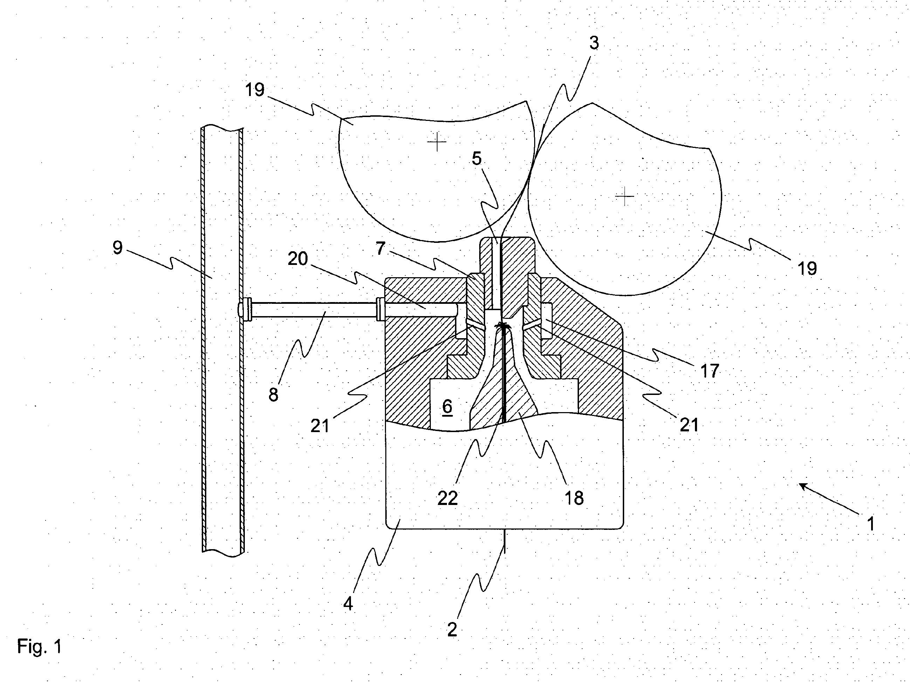

In Figur 1 ist eine teilweise geschnittene Seitenansicht der Spinnstelle 1 einer Luftspinnmaschine gezeigt, wie sie bereits im Stand der Technik bekannt ist. Die Spinnstelle 1 umfasst eine Spinndüse 4 mit einer Einlauföffnung 5, über die der zu verspinnende Faserverband 3 (meist in Form eines verstreckten Faserbands) in die sogenannte Wirbelkammer 6 der Spinnstelle 1 gelangt, in der wiederum der eigentliche Spinnprozess stattfindet. Die Verstreckung übernimmt in der Regel ein der Spinnstelle 1 vorgeschaltetes Streckwerk (in den Figuren nicht gezeigt), aus dem der verstreckte Faserverband 3, beispielsweise mit Hilfe eines Abzugswalzenpaars, abgezogen wird. Schließlich wird der Faserverband 3 vorzugsweise von einem Lieferwalzenpaar erfasst, wobei dessen Lieferwalzen 19 in möglichst unmittelbarer Nachbarschaft der Einlauföffnung 5 platziert sein sollten, um sicherzustellen, dass der Faserverband 3 zuverlässig und gleichmäßig vom Streckwerk an die Spinndüse 4 übergeben werden kann.

Nachdem der Faserverband 3 die Einlauföffnung 5 der Spinndüse 4 passiert hat, gelangt es in den Wirkbereich mehrerer, in der Regel über eine entsprechende Wandung 7 tangential in die Wirbelkammer 6 mündender, Luftdüsen 21, die untereinander beispielsweise mit Hilfe eines in Figur 1 gezeigten Ringkanals 17 verbunden sein können. Werden der Ringkanal 17 und damit die davon abzweigenden Luftdüsen 21 während des Spinnbetriebs mit einem Überdruck beaufschlagt, so entsteht eine Wirbelluftströmung, die den oberen Bereich eines in die Wirbelkammer 6 ragenden Garnbildungselements 18 umströmt. Werden die nach außen abstehenden Faserenden des in die Wirbelkammer 6 einlaufenden Faserverbands 3 von dieser Luftströmung erfasst, so entsteht die gewünschte Drehung des Fasermaterials im Bereich des Garnbildungselements 18 und im Ergebnis das gewünschte Garn 2, welches schließlich über einen Abzugskanal 22 aus der Wirbelkammer 6 abgezogen werden kann.

Generell sei an dieser Stelle klargestellt, dass es sich bei dem hergestellten Garn 2 grundsätzlich um einen beliebigen Faserverband 3 handeln kann, der sich dadurch auszeichnet, dass ein außenliegender Teil der Fasern (sogenannte Umwindefasern) um einen inneren, vorzugsweise ungedrehten Teil der Fasern, herumgeschlungen ist, um dem Garn 2 eine gewisse Festigkeit zu verleihen. Neben herkömmlichen Luftspinnmaschinen, mit deren Hilfe ein Garn 2 im herkömmlichen Sinne (das beispielsweise mit Hilfe einer Webmaschine zu einem Stoff verarbeitet werden kann) hergestellt werden kann, ist von der Erfindung also auch eine Luftspinnmaschine umfasst, mit deren Hilfe sich sogenanntes Vorgarn produzieren lässt. Bei Vorgarn handelt es sich um ein Garn 2 mit einem relativ geringen Anteil an Umwindefasern, bzw. um ein Garn 2, bei dem die Umwindefasern relativ locker um den inneren Kern geschlungen sind, so dass das Garn 2 verzugsfähig bleibt. Dies ist dann entscheidend, wenn das hergestellte Garn 2 an einer nachfolgenden Textilmaschine (beispielsweise einer Ringspinnmaschine) nochmals mit Hilfe eines Streckwerks verzogen werden soll bzw. muss, um entsprechend weiterverarbeitet werden zu können.

Unabhängig von der Art des zu produzierenden Garns 2 (herkömmliches Garn bzw. Vorgarn) ist sämtlichen Luftspinnmaschinen gemeinsam, dass die Spinnstelle(n) 1 über eine Fluidverbindung 8 mit einer Druckluftquelle 9 in Verbindung stehen, über die die Luftdüsen 21 schließlich mit der nötigen Druckluft versorgt werden können (wobei die Spinndüse 4 selbst eine vorzugsweise innenliegende Luftleitung 20 aufweisen kann, mit deren Hilfe wiederum eine Verbindung des genannten Ringkanals 17 und der die Spinndüse 4 mit der Druckluftquelle 9 verbindenden Fluidverbindung 8 erfolgt).

Als Druckluftquelle 9 ist in Figur 1 beispielsweise ein Rohr dargestellt, in dem ein entsprechender Überdruck herrscht (der beispielsweise mit Hilfe eines luftspinnmaschineneigenen Druckluftgenerators oder aber dem Druckluftnetz einer Spinnerei in Verbindung steht). Generell ist im Rahmen der Erfindung unter der Bezeichnung "Druckluftquelle" jedoch der (wie auch immer ausgebildete) Bereich der Luftspinnmaschine zu verstehen, der (zumindest während der Garnproduktion) mit einem bestimmten Überdruck beaufschlagt ist und mit der Spinnstelle 1 über eine entsprechende Fluidverbindung 8 verbunden ist, so dass Luft von der Druckluftquelle 9 in die Spinndüse 4 strömen kann.

Selbstverständlich können zwischen den Luftdüsen 21 und der Druckluftquelle 9 auch Ventile oder sonstige Regelvorrichtungen vorhanden sein, über die die Spinnstelle 1 beispielsweise von einem Ruhemodus (in dem keine Luft durch die Luftdüsen 21 strömt) in einen Produktionsmodus bringbar ist, in dem Luft in die Wirbelkammer 6 strömt, um das gewünschte Garn 2 zu produzieren.

Unabhängig von der genauen Ausgestaltung der Druckluftquelle 9 und/oder der Fluidverbindung 8 ist es im Stand der Technik üblich, dass die Druckluftquelle 9 nicht nur mit der bzw. den Spinndüse(n) 4, sondern auch mit anderen druckluftbetätigbaren Elementen, wie beispielsweise Ventilen oder Druckluftzylindern in Verbindung steht. Die genannten Elemente sind in der Regel auf einen Standardspinndruck von beispielsweise 6 bar ausgelegt, der wiederum von der Druckluftquelle 9 zur Verfügung gestellt wird.

Soll nun der Spinndruck, d. h. der Luftdruck in den Luftdüsen 21, während des Spinnprozesses verändert werden, um bestimmte Garnparameter (Festigkeit, Griffigkeit, etc.) entsprechend zu beeinflussen, so wirkt sich dies meist negativ auf die Betriebsweise der übrigen druckluftbetätigbaren Elemente, wie die oben genannten Ventile oder Druckluftzylinder aus, da auch diese nach der zentralen Anpassung des von der Druckluftquelle 9 zur Verfügung gestellten Luftdrucks mit einem vom Standardluftdruck abweichenden Druck beaufschlagt werden.

Mit anderen Worten kann im Stand der Technik der Spinndruck nur durch zentrale Anpassung des von der Druckluftquelle 9 zur Verfügung gestellten Luftdrucks geändert werden, wobei sich dies nicht selten negativ auf andere Elemente der Luftspinnmaschine auswirkt.

Um diesem Nachteil zu begegnen, wird nun erfindungsgemäß vorgeschlagen, die Spinnstelle 1 mit zumindest zwei Drosselelementen 10 auszurüsten, wobei mit Hilfe des jeweils zum Einsatz kommenden Drosselelements 10 der Volumenstrom der Druckluft, die die Fluidverbindung 8 während des Betriebs der Spinnstelle 1 passiert, begrenzt wird. Aufgrund dieser Volumenstrombegrenzung kommt es zu einer Reduzierung des Luftdrucks, so dass der Luftdruck, der schließlich an den Luftdüsen 21 anliegt, geringer ist, als der von der Druckluftquelle 9 zur Verfügung gestellte Luftdruck. In Abhängigkeit des verwendeten Drosselelements 10 kann der Spinndruck somit mehr oder weniger stark gegenüber dem Luftdruck der Druckluftquelle 9 verringert werden. Dies hat schließlich den entscheidenden Vorteil, dass der Luftdruck, der von der Druckluftquelle 9 zur Verfügung gestellt wird, konstant gehalten werden kann, so dass die jeweiligen Abnehmer (Ventile, Druckluftzylinder, etc.) der Luftspinnmaschine stets mit einem konstanten Luftdruck beaufschlagt sind. Ausfälle aufgrund eines zu geringen Luftdrucks sind auf diese Weise leicht zu vermeiden.

Im Gegensatz hierzu kann der an den Luftdüsen 21 anliegende Spinndruck durch geeignete Wahl des Drosselelements 10 auf einen beliebigen Druck zwischen (theoretisch) 0 bar und dem von der Druckluftquelle 9 zur Verfügung gestellten (Maximal-)Druck eingestellt werden. Im Ergebnis ist bei gleichbleibendem Druckluftquellendruck die Herstellung unterschiedlicher Garne 2 möglich, wobei hierfür lediglich ein entsprechendes Drosselelement 10 zum Einsatz kommen bzw. das aktuell verwendete Drosselelement 10 durch ein Drosselelement 10 mit verändertem Strömungsquerschnitt ersetzt werden muss.

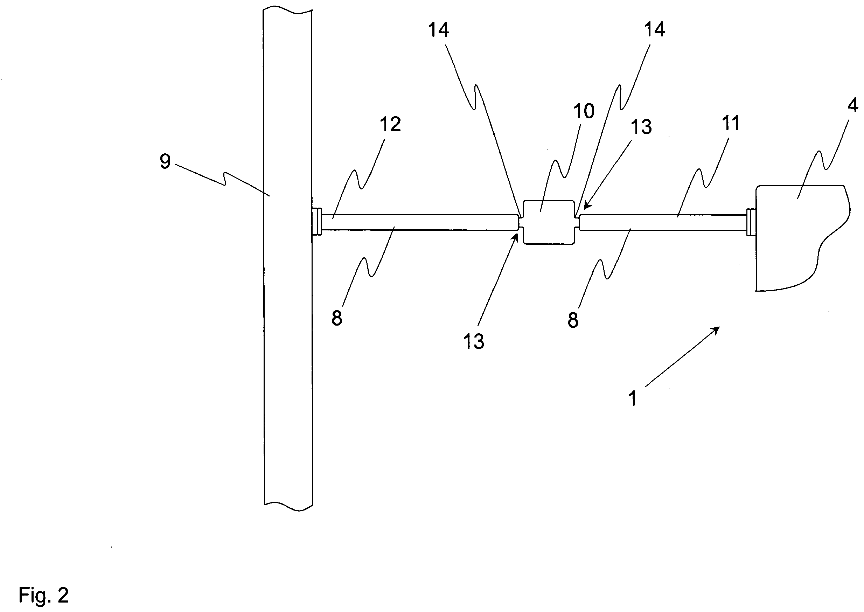

Wie die Figuren 2 bis 4 beispielhaft zeigen, gibt es nun verschiedene Möglichkeiten der Ausgestaltung bzw. Platzierung des erfindungsgemäßen Drosselelements 10, das beispielsweise als einteiliges Kunststoffelement ausgebildet sein kann und einen minimalen Strömungsquerschnitt aufweisen sollte, der geringer ist als der minimale Strömungsquerschnitt der Fluidverbindung 8, um die gewünschte Verringerung des Spinndrucks zu ermöglichen (falls ein Spinndruck erwünscht ist, der dem von der Druckluftquelle 9 zur Verfügung gestellten Luftdruck entspricht, so kann selbstverständlich auch ein Drosselelement 10 zum Einsatz kommen, dessen minimaler Strömungsquerschnitt größer als oder gleich dem minimalen Strömungsquerschnitt der Fluidverbindung 8 ist).

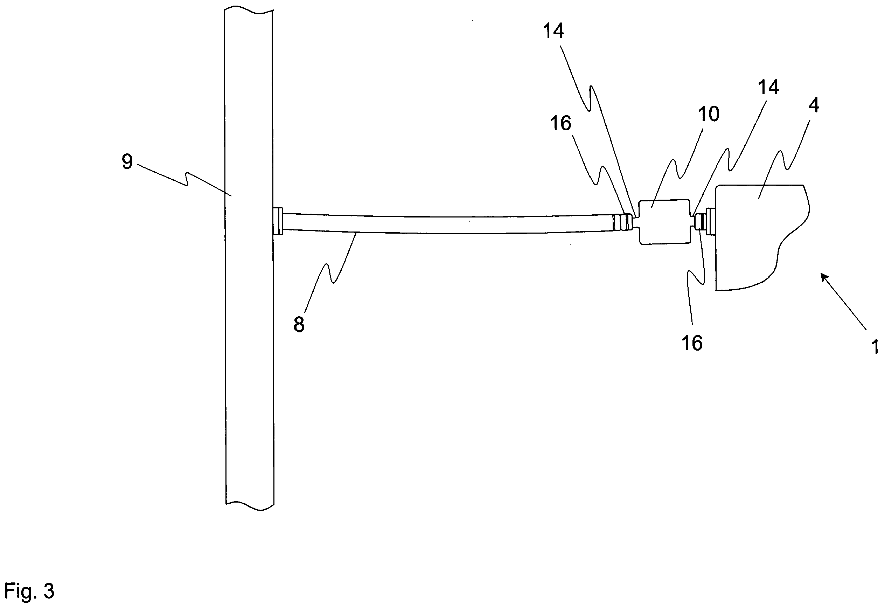

In jedem Fall kann das zum Einsatz kommende Drosselelement 10 direkt mit der Spinndüse 4 (Figur 3) oder aber auch der Druckluftquelle 9 verbunden sein, oder aber, wie in Figur 2 gezeigt, in die Fluidverbindung 8 integriert sein, wobei diese beispielsweise schlauchartig ausgebildet sein kann und vorzugsweise einen ersten Schlauchabschnitt 11 und einen zweiten Schlauchabschnitt 12 aufweist, die wiederum mit dem zum Einsatz kommenden Drosselelement 10 verbunden sind. Im einfachsten Fall wäre es schließlich denkbar, das zum Einsatz kommende Drosselelement 10 direkt in die Fluidverbindung 8 zu integrieren, so dass der Spinndruck durch Austausch der gesamten Fluidverbindung 8 verändert werden könnte.

Bevorzugt sind die Drosselelemente 10 jedoch als von der Fluidverbindung 8 lösbares Bauteil ausgebildet, wobei die Verbindung zwischen Fluidverbindung 8 und dem zum Einsatz kommenden Drosselelement 10 (bzw. zwischen Drosselelement 10 und Druckluftquelle 9 bzw. Drosselelement 10 und Spinndüse 4) vorzugsweise derart ausgebildet sein sollte, dass ein Lösen derselben ohne den Einsatz eines Werkzeugs möglich ist.

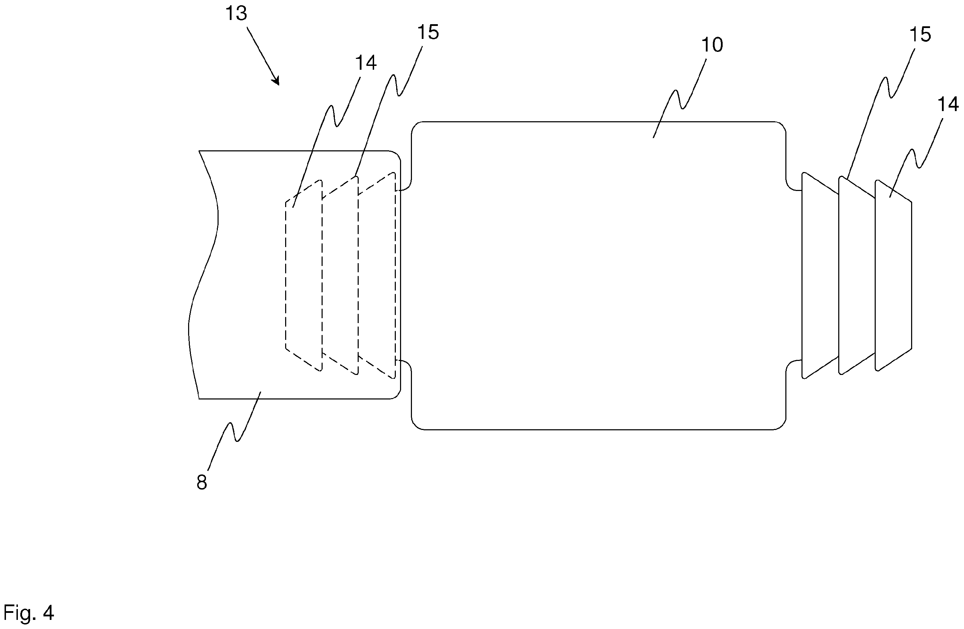

So ist es beispielsweise denkbar, das zum Einsatz kommende Drosselelement 10 (das z. B. als mit zwei Anschlussabschnitten 14 versehener Hohlkörper ausgebildet sein kann) über eine Steckverbindung 13 mit den benachbarten Abschnitten (Fluidverbindung 8, Spinnstelle 1 oder Druckluftquelle 9) der Spinnstelle 1 zu verbinden. Eine besonders einfache Ausgestaltung einer derartigen Steckverbindung 13 zeigen die Figuren 2 und 4. So könnten die Drosselelemente 10 Anschlussabschnitte 14 aufweisen, die von der z. B. schlauchförmig ausgebildeten Fluidverbindung 8 übergriffen werden können. Für einen besonders zuverlässigen Halt wäre es ferner erwägenswert, die Anschlussabschnitte 14 mit einer in Figur 4 gezeigten unebenen Außenkontur 15 zu versehen, so dass ein versehentliches Abziehen der Fluidverbindung 8 bzw. deren Einzelabschnitte (z. B. in Form des ersten Schlauchabschnitts 11 oder des zweiten Schlauchabschnitts 12) nahezu ausgeschlossen werden kann.

In einer weiteren Ausgestaltung der Erfindung wäre es schließlich ebenso denkbar, das zum Einsatz kommende Drosselelement 10 mit Hilfe einer oder mehrerer Schnellkupplungen 16 mit der Fluidverbindung 8, der Spinnstelle 1 oder der Druckluftquelle 9 zu verbinden. Derartige (in der Regel federgesicherte) Schnellkupplungen 16 sind grundsätzlich im Stand der Technik bekannt und ermöglichen ein besonders einfaches, schnelles und vor allem werkzeugloses Lösen der Verbindung zwischen dem zum Einsatz kommenden Drosselelement 10 und den damit verbundenen Bauteilen der Spinnstelle 1.

Im Ergebnis wird durch die vorliegende Erfindung somit eine Spinnstelle 1 bzw. eine mehrere Spinnstellen 1 umfassende Luftspinnmaschine vorgeschlagen, bei der in Abhängigkeit der gewünschten Garneigenschaften und durch Auswahl des geeigneten Drosselelements 10 ein definierter Spinndruck einstellbar ist, wobei der von der Druckluftquelle 9 zur Verfügung gestellte Luftdruck nicht verändert werden muss.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale.

### Bezugszeichenliste

- 1: Spinnstelle
- 2: Garn
- 3: Faserverband
- 4: Spinndüse
- 5: Einlauföffnung
- 6: Wirbelkammer
- 7: Wandung
- 8: Fluidverbindung
- 9: Druckluftquelle
- 10: Drosselelement
- 11: erster Schlauchabschnitt
- 12: zweiter Schlauchabschnitt
- 13: Steckverbindung
- 14: Anschlussabschnitt
- 15: Außenkontur
- 16: Schnellkupplung
- 17: Ringkanal
- 18: Garnbildungselement
- 19: Lieferwalze
- 20: Luftleitung
- 21: Luftdüse
- 22: Abzugskanal

## Patentansprüche

1. Spinnstelle einer Luftspinnmaschine, die der Herstellung eines Garns (2) aus einem Faserverband (3) dient, wobei die Spinnstelle (1) eine Spinndüse (4) mit einer eine Einlauföffnung (5) für den Faserverband (3) aufweisenden Wirbelkammer (6) besitzt, wobei die Spinnstelle (1) in die Wirbelkammer (6) gerichtete Luftdüsen (21) aufweist, die im Bereich einer die Wirbelkammer (6) umgebenden Wandung (7) in die Wirbelkammer (6) münden und über die während des Betriebs der Spinnstelle (1) Druckluft in einer vorgegebenen Drehrichtung in die Wirbelkammer (6) einbringbar ist, um dem Faserverband (3) eine Drehung in der genannten Drehrichtung zu erteilen, wobei die Luftdüsen (21) mit Hilfe wenigstens einer Fluidverbindung (8) mit einer Druckluftquelle (9) in Verbindung stehen, **dadurch gekennzeichnet, dass** die Spinnstelle (1) mehrere austauschbare Drosselelemente (10) umfasst, wobei mit Hilfe der einzelnen Drosselelemente (10) jeweils der Volumenstrom der Druckluft, die von der Druckluftquelle (9) während des Betriebs der Spinnstelle (1) in die Wirbelkammer (6) strömt, begrenzt wird, wobei das jeweils zum Einsatz kommende Drosselelement (10) im Strömungsweg der Druckluft zwischen der Druckluftquelle (9) und den Luftdüsen (21) platziert und in die Fluidverbindung (8) integriert ist, wobei die Drosselelemente (10) als von der Fluidverbindung (8) lösbares Bauteil ausgebildet sind, und wobei wahlweise ein Drosselelement (10) zum Einsatz kommt, das bei einem definierten Luftdruck der Druckluftquelle (9) einen konkreten Luftvolumenstrom im Bereich der Luftdüsen (21) ermöglicht.

2. Spinnstelle gemäß einem der vorangegangenen Ansprüche, **dadurch gekennzeichnet, dass** die Drosselelemente (10) eine minimale innere Querschnittsfläche aufweisen, die kleiner ist als die minimale innere Querschnittsfläche der Fluidverbindung (8).

3. Spinnstelle gemäß einem der vorangegangenen Ansprüche, **dadurch gekennzeichnet, dass** die Fluidverbindung (8) schlauchförmig ausgebildet ist.

4. Spinnstelle gemäß einem der vorangegangenen Ansprüche, **dadurch gekennzeichnet, dass** die Fluidverbindung (8) wenigstens zwei separate Schlauchabschnitte aufweist, wobei ein erster Schlauchabschnitt (11) die Spinndüse (4) mit dem zum Einsatz kommenden Drosselelement (10) und ein zweiter Schlauchabschnitt (12) das zum Einsatz kommende Drosselelement (10) mit der Druckluftquelle (9) verbindet.

5. Spinnstelle gemäß einem der vorangegangenen Ansprüche, **dadurch gekennzeichnet, dass** die Drosselelemente (10) einteilig ausgebildet sind.

6. Spinnstelle gemäß einem der vorangegangenen Ansprüche, **dadurch gekennzeichnet, dass** die Drosselelemente (10) aus Kunststoff gefertigt sind.

7. Spinnstelle gemäß einem der vorangegangenen Ansprüche, **dadurch gekennzeichnet, dass** das zum Einsatz kommende Drosselelement (10) mit der Fluidverbindung (8), der Spinnstelle (1) und/oder der Druckluftquelle (9) mit Hilfe einer oder mehrerer Steckverbindung(en) (13) und/oder Schraubverbindung(en) verbunden ist.

8. Spinnstelle gemäß einem der vorangegangenen Ansprüche, **dadurch gekennzeichnet, dass** die Drosselelemente (10) wenigstens einen Anschlussabschnitt (14) aufweisen, wobei das zum Einsatz kommende Drosselelement (10) mit Hilfe des Anschlussabschnitts (14) mit der Fluidverbindung (8), der Spinnstelle (1) und/oder der Druckluftquelle (9) form- und/oder reibschlüssig verbunden ist.

9. Spinnstelle gemäß dem vorangegangenen Anspruch, **dadurch gekennzeichnet, dass** der Anschlussabschnitt (14) eine unebene Außenkontur (15) aufweist, über die es mit der Fluidverbindung (8), der Spinnstelle (1) und/oder der Druckluftquelle (9) in Verbindung steht.

10. Spinnstelle gemäß einem der vorangegangenen Ansprüche, **dadurch gekennzeichnet, dass** das zum Einsatz kommende Drosselelement (10) mit der Fluidverbindung (8), der Spinnstelle (1) und/oder der Druckluftquelle (9) über eine oder mehrere Schnellkupplung(en) (16) verbunden ist.

11. Spinnstelle gemäß einem der vorangegangenen Ansprüche, **dadurch gekennzeichnet, dass** die Spinnstelle (1) mehrere in Reihe oder parallel geschaltete Drosselelemente (10) besitzt, die im Strömungsweg der Druckluft zwischen der Druckluftquelle (9) und den Luftdüsen (21) platziert sind.

## Claims

1. Spinning position of an air-jet spinning machine, which serves the purpose of producing a yarn (2) from a fiber composite (3), whereas the spinning position (1) possesses a spinning nozzle (4) with a vortex chamber (6) featuring an inlet opening (5) for the fiber composite (3), whereas the spinning position (1) features air nozzles (21) directed into the vortex chamber (6), which air nozzles flow into the vortex chamber (6) in the area of a wall (7) surrounding the vortex chamber (6) and through which air nozzles, during operation of the spinning position (1), compressed air can be introduced into the vortex chamber (6) in a given direction of rotation, in order to confer upon the fiber composite (3) a rotation in the specified direction of rotation, and whereas the air nozzles (21) are connected to a source of compressed air (9) with the assistance of at least one fluid connection (8), **characterized in that** the spinning position (1) includes a plurality of replaceable throttle element (10), with the assistance of each single throttle element (10) the volume flow of the compressed air, which flows from the source of compressed air (9) into the vortex chamber (6) during the operation of the spinning position (1), is limited, whereas the respectively used throttle element (10) is placed in the flow path of the compressed air between the source of compressed air (9) and the air nozzles (21) and is integrated into the fluid connection (8), the throttle elements (10) being designed as a component which can be detached from the fluid connection (8), and selectively a throttle element (10) being used, at a defined air pressure of the source of compressed air (9), permits a specific air volume to flow in the area of the air nozzles (21).

2. Spinning position in accordance with one of the preceding claims, **characterized in that** the throttle element (10) features a minimum inner cross-sectional area that is smaller than the minimum inner cross-sectional area of the fluid connection (8).

3. Spinning position in accordance with one of the preceding claims, **characterized in that** the fluid connection (8) is designed in tubular form.

4. Spinning position in accordance with one of the preceding claims, **characterized in that** the fluid connection (8) features at least two separate tube sections, whereas a first tube section (11) connects the spinning nozzle (4) to the throttle element (10) and a second tube section (12) connects the throttle element (10) to the source of compressed air (9).

5. Spinning position in accordance with one of the preceding claims, **characterized in that** the throttle element (10) is designed in one piece.

6. Spinning position in accordance with one of the preceding claims, **characterized in that** the throttle element (10) is made of plastic.

7. Spinning position in accordance with one of the preceding claims, **characterized in that** the throttle element (10) used is connected to the fluid connection (8), the spinning position (1) and/or the source of compressed air (9) with the assistance of one or more plug connection(s) (13) and/or screw connection(s).

8. Spinning position in accordance with one of the preceding claims, **characterized in that** the throttle element (10) features at least one connection section (14), whereas the throttle element (10) used is connected to the fluid connection (8), the spinning position (1) and/or the source of compressed air (9) with the aid of the connection section (14) in a positive-locking and/or frictional-locking manner.

9. Spinning position in accordance with the preceding claim, **characterized in that** the connection section (14) features an uneven outer contour (15), through which it is connected to the fluid connection (8), the spinning position (1) and/or the source of compressed air (9).

10. Spinning position in accordance with one of the preceding claims, **characterized in that** the throttle element (10) used is connected to the fluid connection (8), the spinning position (1) and/or the source of compressed air (9) through one or more quick coupler(s) (16).

11. Spinning position in accordance with one of the preceding claims, **characterized in that** the spinning position (1) possesses multiple throttle elements (10) connected in series or parallel, which are placed in the flow path of the compressed air between the source of compressed air (9) and the air nozzles (21).

## Revendications

1. Poste de filage d'un métier à filer à jet d'air qui sert à fabriquer un fil (2) à partir d'un ensemble de fibres (3), le poste de filage (1) ayant une filière de filage (4) avec une chambre de turbulence (6) ayant une ouverture d'entrée (5) pour l'ensemble de fibres (3), le poste de filage (1) ayant des buses d'air (21) orientées dans la chambre de turbulence (6), lesquelles s'ouvrent dans la chambre de turbulence (6) dans la zone d'une paroi (7) entourant la chambre de turbulence (6) et par laquelle, pendant le fonctionnement du poste de filage (1), de l'air comprimé peut être introduit dans la chambre de turbulence (6) dans un sens de rotation prédéterminé afin de donner à l'ensemble de fibres (3) une rotation dans ledit sens de rotation, les buses d'air (21) étant en relation avec une source (9) d'air comprimé via au moins une connexion fluidique (8), **caractérisé en ce que** le poste de filage (1) comprend plusieurs éléments d'étranglement interchangeables (10), le débit volumique de l'air comprimé qui s'écoule de la source (9) d'air comprimé dans la chambre de turbulence (6) pendant le fonctionnement du poste de filage (1) étant limité respectivement par les différents éléments d'étranglement (10), l'élément d'étranglement (10) respectivement utilisé étant placé sur le trajet d'écoulement de l'air comprimé entre la source (9) d'air comprimé et les buses d'air (21) et intégré dans la connexion fluidique (8), les éléments d'étranglement (10) étant conçus sous la forme d'un composant détachable de la connexion fluidique (8), et un élément d'étranglement (10) étant éventuellement utilisé qui, à une pression d'air définie de la source (9) d'air comprimé, permet un débit volumique d'air concret dans la zone des buses à air (21).

2. Poste de filage selon l'une quelconque des revendications précédentes, **caractérisé en ce que** les éléments d'étranglement (10) présentent une surface de section transversale intérieure minimale qui est inférieure à la surface de section transversale intérieure minimale de la connexion fluidique (8).

3. Poste de filage selon l'une quelconque des revendications précédentes, **caractérisé en ce que** la connexion fluidique (8) se présente sous une forme tubulaire.

4. Poste de filage selon l'une quelconque des revendications précédentes, **caractérisé en ce que** la relation fluidique (8) présente au moins deux sections de tuyau séparées, une première section de tuyau (11) reliant la filière de filage (4) à l'élément d'étranglement (10) utilisé et une seconde section de tuyau (12) reliant l'élément d'étranglement (10) utilisé à la source (9) d'air comprimé.

5. Poste de filage selon l'une quelconque des revendications précédentes, **caractérisé en ce que** les éléments d'étranglements (10) se présentent sous une forme en une pièce.

6. Poste de filage selon l'une quelconque des revendications précédentes, **caractérisé en ce que** les éléments d'étranglements (10) sont en matière plastique.

7. Poste de filage selon l'une quelconque des revendications précédentes, **caractérisé en ce que** l'élément d'étranglement (10) utilisé est relié avec la connexion fluidique (8), le poste de filage (1) et/ou la source (9) d'air comprimé au moyen d'un ou plusieurs connecteur(s) de raccordement (13) et/ou raccord(s) à vis.

8. Poste de filage selon l'une quelconque des revendications précédentes, **caractérisé en ce que** les éléments d'étranglement (10) présentent au moins une section de raccordement (14), l'élément d'étranglement (10) utilisé étant relié par complémentarité de formes et/ou par friction, à l'aide de la section de raccordement (14), à la connexion fluidique (8), le poste de filage (1) et/ou la source (9) d'air comprimé.

9. Poste de filage selon la revendication précédente, **caractérisé en ce que** la section de raccordement (14) présente un contour extérieur (15) irrégulier par lequel elle est en relation avec la connexion fluidique (8), le poste de filage (1) et/ou la source d'air (9) comprimé.

10. Poste de filage selon l'une quelconque des revendications précédentes, **caractérisé en ce que** l'élément d'étranglement (10) utilisé est relié avec la connexion fluidique (8), le poste de filage (1) et/ou la source (9) d'air comprimé par un ou plusieurs raccord(s) rapide (16).

11. Poste de filage selon l'une quelconque des revendications précédentes, **caractérisé en ce que** le poste de filage (1) présente plusieurs éléments d'étranglement (10) montés en série ou en parallèle, qui sont placés sur le trajet d'écoulement d'air comprimé entre la source (9) d'air comprimé et les buses d'air (21).
